(19) Europäisches Patentamt
European Patent Office
Office européen des brevets

(11) **EP 3 134 955 B1**

(12) **FASCICULE DE BREVET EUROPEEN**

(45) Date de publication et mention de la délivrance du brevet:
**02.01.2019 Bulletin 2019/01**

(21) Numéro de dépôt: **15720640.0**

(22) Date de dépôt: **22.04.2015**

(51) Int Cl.:
***H02J 13/00*** *(2006.01)*      ***G01R 21/00*** *(2006.01)*

(86) Numéro de dépôt international:
**PCT/EP2015/058693**

(87) Numéro de publication internationale:
**WO 2015/162167 (29.10.2015 Gazette 2015/43)**

(54) **PROCÉDÉ D'ANALYSE D'APPORTS THERMIQUES DANS UNE INSTALLATION ÉQUIPÉE D'ÉQUIPEMENTS CONSOMMATEURS D'ÉNERGIE**

VERFAHREN ZUR ANALYSE VON IN EINE EINRICHTUNG MIT EINER ENERGIEVERBRAUCHENDEN VORRICHTUNG EINGEFÜHRTER WÄRME

METHOD FOR ANALYZING HEAT INTRODUCED INTO A FACILITY PROVIDED WITH ENERGY-CONSUMING EQUIPMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.04.2014 FR 1453589**

(43) Date de publication de la demande:
**01.03.2017 Bulletin 2017/09**

(73) Titulaire: **SOMFY ACTIVITES SA**
**74300 Cluses (FR)**

(72) Inventeurs:
• **CAVAREC, Pierre-Emmanuel**
**F-74130 Mont Saxonnex (FR)**
• **DEPREUX, Vincent**
**F-74800 La Roche sur Foron (FR)**

(74) Mandataire: **Bugnion Genève**
**Bugnion SA**
**10, route de Florissant**
**Case Postale 375**
**1211 Genève 12 (CH)**

(56) Documents cités:
EP-A1- 2 378 213      DE-A1-102008 032 880
FR-A1- 2 932 030      US-A1- 2003 050 737

**Description**

**DOMAINE TECHNIQUE DE L'INVENTION**

L'invention se rapporte à un procédé d'analyse d'apports thermiques dans une installation.

**ETAT DE LA TECHNIQUE ANTERIEURE**

On connaît, par exemple par le document FR 2 932 030, un système de suivi de l'alimentation d'un appareil électrique, et une prise électrique communicante pour un tel système. Dans le document US 2003-0050737 est par ailleurs proposé un système qui permet la gestion des appareils électriques d'un bâtiment. Le système proposé comprend des prises murales équipées de modules qui permettent le suivi de la consommation électrique ou de l'état de marche des appareils connectés et qui sont aptes à communiquer avec une unité centrale qui traite, pour le bâtiment concerné, l'ensemble des informations transmises par ces modules. Mais ces informations ne sont pas mises à profit pour une modélisation thermique du bâtiment, alors même que les équipements électriques participent, par exemple par effet Joule, au bilan thermique du bâtiment.

La mesure de la consommation énergétique associée à des capteurs de température permet de reconstituer expérimentalement un modèle thermique du bâtiment.

Il est en effet connu d'utiliser des logiciels de modélisation thermique du bâtiment pour déterminer, à partir d'une description précise du bâtiment, ses consommations énergétiques et ses besoins en chauffage ou rafraîchissement. Cependant cette description n'est pas toujours précise (cas de rénovation), ou chère à mettre en oeuvre. Le bâtiment a aussi pu évoluer (dégradation de l'isolant).

Dans le document EP 2 378 213 est divulgué un procédé d'analyse d'apports thermiques dans un bâtiment équipé d'équipements consommateurs d'énergie, notamment un équipement de chauffage ou de refroidissement, ou des radiateurs, ainsi que des éclairages et d'autres sources dites indirectes. Suivant ce procédé, on mesure une consommation réelle de l'équipement de chauffage ou de refroidissement, et on tient éventuellement compte de la présence des sources indirectes. Mais la prise en compte des sources indirectes reste imprécise. D'ailleurs, le procédé d'analyse résultant pas adapté au pilotage d'un équipement de chauffage, de ventilation ou de climatisation du bâtiment.

**EXPOSÉ DE L'INVENTION**

L'invention vise à tirer profit d'informations relatives à des équipements consommateurs d'énergie dans une installation, pour une meilleure modélisation thermique en temps réel de l'installation.

Pour ce faire est proposé, suivant un premier aspect de l'invention, un procédé d'analyse d'apports thermiques dans une installation, notamment un bâtiment, équipée d'équipements consommateurs d'énergie, suivant lequel pour un ensemble de plusieurs équipements identifiés contribuant au bilan thermique du bâtiment parmi les équipements consommateurs d'énergie, on mesure en temps réel une valeur d'énergie consommée par chacun des équipements identifiés et on estime une quantité de chaleur apportée à l'installation ou extraite de l'installation par chacun des équipements identifiés en fonction au moins de la valeur d'énergie consommée et d'un ou plusieurs paramètres de caractérisation thermique associés à chacun des équipements identifiés, le procédé comprenant une étape d'apprentissage par laquelle on associe à chacun des équipements identifiés le ou les paramètres de caractérisation thermique, par l'intermédiaire d'une interface personne-machine de configuration ou par auto-apprentissage, le ou les paramètres de caractérisation thermique comportant un paramètre de rendement thermique et un paramètre de temporisation thermique, la temporisation pouvant être en avance ou en retard.

L'invention est définie par les caractéristiques de la revendication indépendante. Les modes de réalisations préférés sont définis par les revendications dépendantes.

Le ou les paramètres de caractérisation thermique permettent de différentier les équipements consommateurs suivant leur impact thermique. En effet, une même consommation d'énergie n'aura pas le même impact thermique sur l'installation suivant son utilisation. Certains équipements, par exemple des équipements consommateurs électriques tels qu'un radiateur, four, fer à repasser, aspirateur ou compresseur, dissipent l'intégralité de l'énergie consommée en chaleur de manière pratiquement instantanée. Si l'équipement est situé à l'intérieur d'une enceinte de l'installation, la chaleur chauffera l'air assez rapidement (dans l'heure). S'il est utilisé à l'extérieur, il ne participera pas à la thermique (tondeuse, ventilation mécanique motorisée, éclairage extérieur, volet roulant...). Si l'équipement consommateur d'énergie est un équipement de chauffage d'un ballon d'eau chaude, une partie de la chaleur produite se retrouve dans le bâtiment, dans la journée précédant la consommation électrique et une autre est évacuée avec les eaux grises. Si l'équipement électrique est une pompe à chaleur, l'énergie consommée apporte à l'installation plusieurs fois sa valeur en thermique, suivant le coefficient de performance de la pompe à chaleur. Dans une machine telle qu'un lave-linge, un lave-vaisselle ou un sèche-linge, une partie variable de l'énergie consommée est rejetée dehors. D'autres équipements participant aux apports thermiques peuvent être caractérisés en un groupe produisant une quantité d'énergie thermique globale dite « d'apports internes ».

Suivant un mode de réalisation, le ou les paramètres de caractérisation thermique comportent un paramètre de rendement thermique. On peut prévoir une étape préalable d'identification d'équipements ayant un rendement thermique strictement inférieur à 1 (par ex. lave-linge) ou strictement supérieur à 1 (par exemple pompe à chaleur) parmi les équipements consommateurs d'énergie pour constituer tout ou partie de l'ensemble d'équipements identifiés. On peut en particulier prévoir la mémorisation, pour chacun des équipements ayant un rendement thermique inférieur ou strictement supérieur à 1, d'une valeur, de préférence constante, d'un paramètre de rendement thermique.

Suivant un mode de réalisation, le ou les paramètres de caractérisation thermique comportent un paramètre de temporisation thermique. On peut notamment prévoir une étape préalable d'identification d'équipements ayant une réponse thermique temporisée (par exemple le four ou un ballon d'eau chaude) parmi les équipements consommateurs d'énergie pour constituer tout ou partie de l'ensemble d'équipements identifiés. On peut notamment prévoir la mémorisation pour chacun des équipements ayant une réponse thermique temporisée, d'une valeur, de préférence constante, d'un paramètre de temporisation thermique. La temporisation thermique peut être en avance, lorsque la mesure d'énergie consommée précède l'apport d'une quantité de chaleur à l'installation, ou en retard, lorsque la mesure d'énergie consommée est postérieure à l'apport d'une quantité d'énergie, comme c'est le cas par exemple avec un ballon d'eau chaude sanitaire.

Naturellement, un même équipement consommateur d'énergie peut avoir un comportement temporisé et un rendement non égal à un, et justifier à la fois un paramètre de temporisation thermique et un paramètre de rendement thermique.

Les équipements identifiés comportent de préférence des équipements électriques, et l'on peut dans ce cas mesurer la valeur d'énergie consommée par chaque équipement identifié par une mesure de consommation électrique, notamment une mesure d'intensité de courant électrique, de puissance électrique ou d'énergie électrique consommée. On peut notamment prévoir que pour au moins un équipement électrique parmi les équipements identifiés, la mesure de consommation électrique est faite par l'intermédiaire d'une prise électrique communicante d'alimentation de l'équipement électrique, d'une cellule communicante intégrée à l'équipement identifié ou d'une signature électrique identifiée sur un tableau électrique d'alimentation d'au moins une partie de l'installation incluant l'équipement électrique.

On peut également de la même manière prendre en compte dans le bilan thermique des équipements consommateurs identifiés, tels qu'une chaudière à gaz, dont la valeur d'énergie consommée correspond non pas à une consommation électrique, mais à une consommation de combustible.

On peut également prendre en compte dans le modèle des éléments non maitrisés (cuisine, chauffage au bois ou ouverture de fenêtres) ayant un impact sur le bilan thermique mais dont le fonctionnement n'est pas visible dans la mesure de la consommation électrique.

Contrairement à une approche par filtrage, le procédé peut comporter une étape de caractérisation d'éléments non maîtrisés. Le procédé considère comme un événement exceptionnel les cas où une température mesurée dans le bâtiment s'éloigne trop d'une valeur théorique définie par le modèle thermique appliqué au bâtiment. En cas d'événement exceptionnel, on stoppe au moins temporairement la corrélation entre les mesures de consommation et le modèle thermique. Ceci permet d'éviter que l'ajustement du modèle thermique en temps réel n'intègre ces données perturbatrices et une éventuelle perturbation du fonctionnement d'un équipement électrique, tel qu'un chauffage, lorsque ce fonctionnement est en réponse au modèle thermique. De manière complémentaire, cette étape de caractérisation d'éléments non maîtrisés comprend une étape de détermination de la puissance estimée liée à l'événement.

Par exemple, il est possible d'afficher l'énergie produite par un poêle à bois (en kWh sur un certain nombre d'heures) ou l'énergie dissipée lors de l'ouverture d'une fenêtre.

Pour cela, on compare la température réelle et la température proposée par le modèle au cours de l'étape de caractérisation d'éléments non maîtrisés.

Une variation de température à la hausse par rapport à la température attendue fournie par le modèle thermique est due par exemple à une source de chaleur d'origine non électrique ou non prise en compte dans le modèle (poêle à bois, cuisine, salle de bain...) ou, dans une moindre mesure, une présence plus nombreuse d'occupants dans le bâtiment.

Une variation de température à la baisse par rapport à la température attendue fournie par le modèle thermique est due par exemple à une ouverture de fenêtre en période froide.

Les variations de température dues à des éléments non maîtrisés sont relativement simples à détecter : Elles se distinguent par le fait qu'elles sortent de la courbe d'évolution naturelle des températures dans le bâtiment. De plus, il est probable que celles-ci soient périodiques, par exemple une ouverture des fenêtres tous les matins, et liées aux habitudes d'occupation du bâtiment (semaines et week-ends, temps consacrés à la cuisine,...).

Un avantage d'un arrêt de la corrélation entre les mesures de consommation et le modèle thermique est de renforcer la justesse de la corrélation si aucun événement exceptionnel n'est détecté.

Suivant un mode de réalisation préféré, seuls certains équipements consommateurs d'énergie de l'installation sont identifiés comme nécessitant une caractérisation par un ou plusieurs paramètres de caractérisation thermique. On peut notamment prévoir que pour un sous-ensemble d'équipements consommateurs d'énergie non identifiés de l'installation, disjoint et de préférence complémentaire de l'ensemble d'équipements identifiés, on mesure une valeur d'énergie consommée collectivement par les équipements non identifiés et on estime une quantité de chaleur apportée à l'installation ou extraite de l'installation par les équipements non-identifiés en fonction de la valeur d'énergie consommée collectivement. Cette approche volontairement non exhaustive permet de limiter le surcoût de mise en oeuvre du procédé au minimum.

Le sous-ensemble d'équipement consommateurs d'énergie non identifiés de l'installation peut notamment être constitué d'équipements électriques, auquel cas on peut mesurer la valeur d'énergie consommée collectivement par les consommateurs d'énergie non identifiés par une mesure de consommation électrique, notamment une mesure d'intensité de courant électrique, de puissance électrique ou d'énergie électrique consommée, qui peut être avantageusement fait sur un tableau électrique d'alimentation de l'installation.

De préférence, les étapes de mesure et d'estimation sont faites en temps réel.

Le modèle comprend de préférence une étape d'ajustement d'un modèle thermique à partir de valeurs déterminées au cours des étapes de mesure et d'estimation.

On peut prévoir de piloter un équipement de chauffage, de ventilation et/ou de climatisation de l'installation en fonction du modèle thermique en cours et du bilan thermique estimé avec une projection dans le temps. On peut également prévoir une étape de caractérisation d'éléments non maîtrisés comprenant un arrêt de l'ajustement du modèle thermique.

Suivant un mode de réalisation, on prévoit une étape d'apprentissage par laquelle on associe à chacun des équipements identifiés le ou les paramètres de caractérisation thermique, par l'intermédiaire d'une interface personne-machine de configuration ou par auto-apprentissage.

## BRÈVE DESCRIPTION DES FIGURES

D'autres caractéristiques et avantages de l'invention ressortiront à la lecture de la description qui suit, en référence aux figures annexées, qui illustrent :

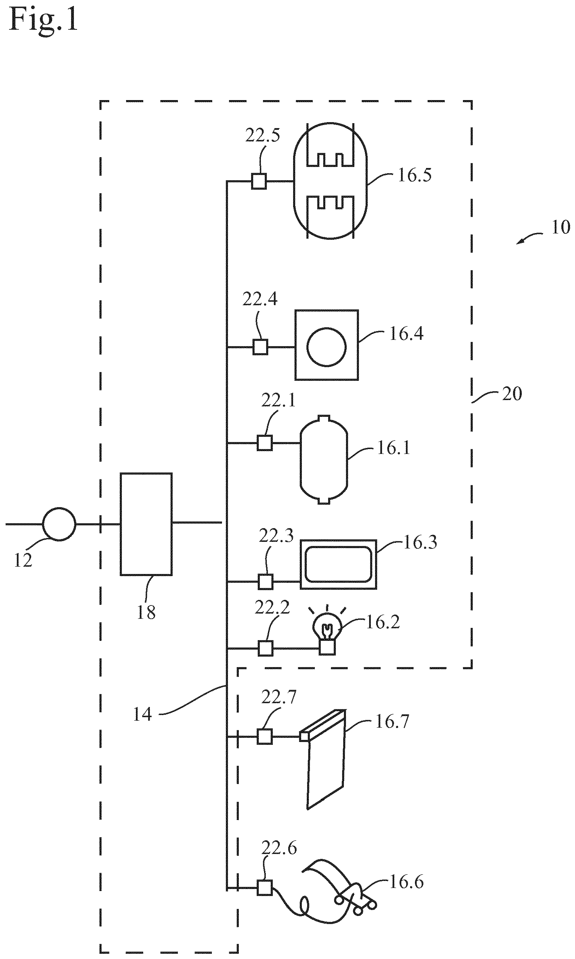

- la figure 1, une installation permettant la mise en oeuvre du procédé selon l'invention.

## DESCRIPTION DÉTAILLÉE DE MODES DE RÉALISATION

Sur la figure 1 est illustrée une installation 10, à savoir une un ensemble d'équipement consommateurs 16.1 à 16.7 d'un bâtiment correspondant à un compteur électrique 12, cette installation 10 étant pourvue d'un réseau électrique interne 14 d'alimentation des divers équipements consommateurs 16.1 à 16.7 reliés au même tableau électrique 18. Certains équipements 16.1 à 16.5 sont situés à l'intérieur d'un bâtiment 20 de la propriété, notamment un ballon d'eau chaude sanitaire 16.1, un éclairage 16.2, un téléviseur 16.3, un lave-linge 16.4 ou une pompe à chaleur 16.5, et d'autres à l'extérieur, par exemple une tondeuse à gazon électrique 16.6, ou un actionneur de volet roulant 16.7.

On souhaite être en mesure de prendre en compte au moins certains des équipements consommateurs d'énergie 16.1 à 16.7 dans le bilan énergétique du bâtiment, et notamment certains équipements dont la production thermique est susceptible d'influer significativement sur le bilan thermique du bâtiment.

Parmi ces équipements, certains se comportent comme des producteurs de chaleur, et leur contribution au bilan thermique du bâtiment peut être estimée collectivement par une mesure de la puissance électrique consommée.

D'autres équipements, situés à l'extérieur du bâtiment, par exemple la tondeuse à gazon 16.6 ou le chauffage de terrasse extérieure un actionneur de portail 16.8, n'ont aucune influence sur le bilan thermique, et doivent être exclus du bilan.

Enfin, d'autres équipements, dits dans la suite équipements identifiés, nécessitent une modélisation plus fine soit parce que leur contribution thermique au bilan thermique du bâtiment est différée, soit parce qu'elle est inférieure ou supérieure à l'énergie électrique consommée. On pense ici notamment aux équipements identifiés suivants:

- équipements à contribution thermique différée: ballon d'eau chaude sanitaire 16.1, four

- équipements à contribution thermique inférieure à leur consommation énergétique: lave-linge 16.4, sèche-linge, lave-vaisselle, ballon d'eau chaude sanitaire 16.1; Ceux-ci peuvent également faire partie des équipements à contribution thermique différée, comme c'est le cas de l'exemple du ballon d'eau chaude sanitaire.

- équipements dont la contribution thermique est dans une zone tampon du bâtiment (zone isolé mais non chauffée) : congélateur ou chaudière au sous-sol.

- équipements à contribution thermique supérieure à leur consommation énergétique: pompe à chaleur 16.5 fonctionnant en mode chauffage;

- équipements à contribution thermique négative: pompe à chaleur 16.5 fonctionnant en mode refroidissement, climatiseur.

L'installateur ou le technicien intervenant sur l'installation pour son réglage a vocation à déterminer dans chaque configuration pratique, en fonction des équipements présents, quels sont les équipements qu'il souhaite caractériser, notamment par rapport aux paramètres de caractérisation thermique mais aussi par rapport à leur emplacement dans différentes zones du bâtiment. Pour ce faire, il met en oeuvre une procédure d'apprentissage.

Les équipements disposent d'une référence unique dans un modèle numérique du réseau électrique interne à l'installation. Ce modèle numérique peut être par exemple un référencement des branchements électriques 22.1 à 22.7 des différents équipements 16.1 à 16.7. L'installateur peut, à partir d'une interface personne-machine, naviguer dans ce modèle du réseau électrique pour sélectionner l'un ou l'autre des équipements 16.1 à 16.7 et lui attribuer des caractéristiques thermiques. Après sélection d'un équipement (numéroté dans la suite "$i$"), il lui est proposé de choisir parmi plusieurs types de paramètres de caractérisation thermique de l'équipement et notamment au moins un paramètre de rendement thermique $R_i$ et un paramètre de temporisation $t_i$. Il peut alors saisir une valeur de paramètre de rendement thermique $R_i$ de son choix et/ou une valeur de paramètre de temporisation $t_i$.

La table 1 ci-après donne des valeurs typiques du paramètre de rendement thermique:

Table 1

| $R_i$ | Descriptif |
|---|---|
| 1 | Valeur par défaut |
| 0,2 | Lave-linge |
| 0,6 | Ballon d'eau chaude sanitaire |
| 3 | Pompe à chaleur en mode "hiver"<br>Cette valeur peut être ajustée en fonction de la température extérieure |
| -3 | Pompe à chaleur en mode été<br>Cette valeur peut être ajustée en fonction de la température extérieure |
| 0 | Équipement extérieur |

La table 2 ci-après donne des valeurs typiques du paramètre de temporisation:

Table 2

| $t_i$ | Descriptif |
|---|---|
| +15' | Valeur par défaut (radiateur électrique, cuisson, veille, compresseurs...) |
| +1h | Lave-vaisselle, sèche-linge |
| -2 à -15 heures | Ballon d'eau chaude (la consommation d'eau chaude sanitaire n'est mesurable qu'après sa consommation) |
| h | Pompe à chaleur air-air |

Ce paramétrage étant réalisé, les données de consommation électrique des différents équipements de l'installation sont mesurées en temps réel et alimentent un modèle thermique de l'installation, et plus spécifiquement du bâtiment. Cette mesure peut être faite soit à l'aide de capteurs disposés sur les branchements de chaque équipement, soit par des capteurs disposés sur les équipements eux-mêmes, soit par une analyse de la signature électrique de chaque équipement au niveau du tableau électrique.

Suivant ce modèle, la quantité de chaleur apportée ou soustraite au bâtiment par chaque équipement est estimée en fonction de la consommation électrique de l'équipement et du ou des paramètres de caractérisation thermique associés à l'équipement.

Par exemple, on mesure l'intensité du courant en fonction du temps pour en déduire la puissance électrique consommée $P_i(t)$ de l'équipement numéroté $i$ à l'instant $t$, puis on en déduit la quantité de chaleur apportée ou extraite par l'équipement par une relation du type:

$$Q_i(t + t_i) = P_i(t).R_i$$

À chaque instant *t,* l'apport de l'ensemble des équipements surveillés au bilan énergétique du bâtiment peut être estimé par la somme des apports individuels:

$$Q_{total}(t) = \sum_i Q_i(t) = \sum_i P_i(t - t_i).R_i$$

Naturellement, le modèle peut être affiné, par exemple en modifiant l'influence de la temporisation.

On peut également diviser l'installation en zones, qui peuvent par exemple correspondre à des pièces ou des typologies de pièces du bâtiment, et estimer la quantité de chaleur apportée dans chaque zone en ne prenant en compte que les équipements consommateurs d'énergie présents dans la zone.

La ou les valeurs de quantité de chaleur instantanée estimées peuvent ensuite être injectées dans un modèle thermique plus général de l'installation, incluant par exemple les apports extérieurs tels que la température extérieure, l'ensoleillement, le vent, les actions sur l'installation, par exemple la fermeture ou l'ouverture de volets, de store. Elles peuvent également être injectées dans un algorithme de commande domotique, par exemple un algorithme de commande de chauffage, de ventilation ou de climatisation.

Il est à souligner que l'approche proposée ne nécessite pas de la part de l'opérateur d'identifier et de paramétrer individuellement tous les équipements consommateurs d'énergie de l'installation. Il peut se contenter des seuls équipements dont l'influence sur le bilan thermique global est potentiellement importante. Il peut également choisir de prendre en compte tous les équipements électriques, mais en globalisant l'apport de ceux qui n'ont pas de temporisation importante et ont un paramètre de rendement égal à un. Dans cette dernière hypothèse, tous les équipements non identifiés lors de la procédure d'apprentissage se voient affecter une valeur par défaut du rendement thermique et une valeur par défaut de la temporisation.

En variante, il est possible d'automatiser la procédure d'apprentissage.

Le but de la mesure de la consommation des équipements électriques dans un bâtiment est donc de reconstituer automatiquement un modèle expérimental du bâtiment. Ce modèle comprendra au minimum la constante de temps thermique du bâtiment et la résistance de son enveloppe. Il pourra cependant être beaucoup plus complexe (suivant le nombre de sondes thermiques internes)

Ce modèle pourra servir à améliorer le pilotage du chauffage. Il donnera aussi de précieuses indications à l'habitant sur l'état réel de son logement. Une mesure de la consommation en kWh/m2.ans pourra être faite pour établir un diagnostic thermique. Cette mesure traduira naturellement le comportement réel des habitants (température du chauffage, nombre d'habitants) et les variabilités du climat (degrés jour unifiés). Le modèle établi à partir des mesures de consommation permettra, par la même occasion, de donner un retour rapide sur l'efficacité d'éventuels travaux de rénovation thermique et valorisera les habitants ayant entrepris cette démarche.

Dans cette approche inversée, la prise en compte précise des apports internes est une réelle amélioration par rapport à la seule prise en compte des apports externes (solaire) et de la valeur totale de la consommation énergétique. De manière générale, la prise en compte des consommations électriques et leur intégration dans un modèle thermique permet l'identification du comportement des occupants dans un bâtiment.

**Revendications**

**1.**   Procédé d'analyse d'apports thermiques dans une installation (10), notamment un bâtiment, équipée d'équipements consommateurs d'énergie (16.1...16.7), **caractérisé en ce que** pour un ensemble de plusieurs équipements identifiés (16.1, 16.4, 16.5) contribuant au bilan thermique du bâtiment parmi les équipements consommateurs d'énergie (16.1...16.7), on mesure en temps réel une valeur d'énergie consommée par chacun des équipements identifiés (16.1, 16.4, 16.5) et on estime une quantité de chaleur apportée à l'installation ou extraite de l'installation par chacun des équipements identifiés (16.1, 16.4, 16.5) en fonction au moins de la valeur d'énergie consommée et d'un ou plusieurs paramètres de caractérisation thermique associés à chacun des équipements identifiés (16.1, 16.4, 16.5), le procédé comprenant une étape d'apprentissage par laquelle on associe à chacun des équipements identifiés le ou les paramètres de caractérisation thermique, par l'intermédiaire d'une interface personne-machine de configuration ou par auto-apprentissage, le ou les paramètres de caractérisation thermique comportant un paramètre de rendement thermique et un paramètre de temporisation thermique, la temporisation pouvant être en avance ou en retard.

2. Procédé selon la revendication 1, **caractérisé en ce qu'**il comporte une étape préalable d'identification d'équipements ayant un rendement thermique strictement inférieur ou strictement supérieur à 1 parmi les équipements consommateurs d'énergie (16.1...16.7) pour constituer tout ou partie de l'ensemble de plusieurs équipements identifiés (16.1, 16.4, 16.5).

3. Procédé selon la revendication 2, **caractérisé en ce qu'**il comporte la mémorisation, pour chacun des équipements ayant un rendement thermique inférieur ou strictement supérieur à 1, d'une valeur, de préférence constante, du paramètre de rendement thermique.

4. Procédé selon l'une quelconque des revendications précédentes, **caractérisé en ce qu'**il comporte une étape préalable d'identification d'équipements ayant une réponse thermique temporisée parmi les équipements consommateurs d'énergie (16.1...16.7) pour constituer tout ou partie de l'ensemble de plusieurs équipements identifiés (16.1, 16.4, 16.5).

5. Procédé selon la revendication 4, **caractérisé en ce qu'**il comporte la mémorisation pour chacun des équipements ayant une réponse thermique temporisée, d'une valeur du paramètre de temporisation thermique.

6. Procédé selon l'une quelconque des revendications précédentes, **caractérisé en ce que** les équipements identifiés comportent des équipements électriques et **en ce que** l'on mesure la valeur d'énergie consommée par chaque équipement identifié par une mesure de consommation électrique, notamment une mesure d'intensité de courant électrique, de puissance électrique ou d'énergie électrique consommée.

7. Procédé selon la revendication précédente, **caractérisé en ce que** pour au moins un équipement électrique parmi les équipements identifiés, la mesure de consommation électrique est faite par l'intermédiaire d'une prise électrique communicante (22.1... 22.7) d'alimentation de l'équipement électrique, d'une cellule communicante intégrée à l'équipement identifié ou d'une signature électrique identifiée sur un tableau électrique (18) d'alimentation d'au moins une partie de l'installation incluant l'équipement électrique.

8. Procédé selon l'une quelconque des revendications précédentes, **caractérisé en ce que** pour un sous-ensemble d'équipements consommateurs d'énergie non identifiés de l'installation, disjoint et de préférence complémentaire de l'ensemble de plusieurs équipements identifiés, on mesure une valeur d'énergie consommée collectivement par les équipements non identifiés et on estime une quantité de chaleur apportée à l'installation ou extraite de l'installation par les équipements non-identifiés en fonction de la valeur d'énergie consommée collectivement.

9. Procédé selon la revendication 8, **caractérisé en ce que** le sous-ensemble d'équipements consommateurs d'énergie non identifiés de l'installation est constitué d'équipements électriques et **en ce que** l'on mesure la valeur d'énergie consommée collectivement par les équipements consommateurs d'énergie non-identifiés par une mesure de consommation électrique, notamment une mesure d'intensité de courant électrique, de puissance électrique ou d'énergie électrique consommée.

10. Procédé selon l'une quelconque des revendications précédentes, **caractérisé en ce que** les étapes de mesure sont faites en temps réel.

11. Procédé selon l'une quelconque des revendications précédentes, **caractérisé en ce qu'**il comprend une étape d'ajustement d'un modèle thermique à partir de valeurs déterminées au cours des étapes de mesure et d'estimation.

12. Procédé selon la revendication précédente, **caractérisé en ce que** l'on pilote un équipement de chauffage, de ventilation et/ou de climatisation de l'installation en fonction du modèle thermique de l'installation.

13. Procédé selon l'une des revendications 11 ou 12, **caractérisé en ce qu'**il comprend une étape de caractérisation d'éléments non maîtrisés comprenant un arrêt de l'ajustement du modèle thermique.

**Patentansprüche**

1. Verfahren zur Analyse von thermischen Einträgen in einer Anlage (10), insbesondere einem Gebäude, ausgestattet mit Energieverbrauchsausrüstungen (16.1...16.7), **dadurch gekennzeichnet, dass** für eine Einheit von mehreren identifizierten Ausrüstungen (16.1, 16.4, 16.5), die zur thermischen Bilanz des Gebäudes unter den Energieverbrauchsausrüstungen (16.1...16.7) beitragen, in Echtzeit ein Wert der Energie, die von jeder der identifizierten Ausrüstungen (16.1, 16.4, 16.5) verbraucht wird, gemessen und eine Menge Wärme geschätzt wird, die von jeder der identifizierten Ausrüstungen (16.1, 16.4, 16.5) je nach mindestens dem Wert der verbrauchten Energie und einem oder mehreren Parametern der thermischen Charakterisierung, assoziiert mit jeder der identifizierten Ausrüstungen (16.1, 16.4, 16.5), in die Anlage eingetragen oder von der Anlage extrahiert wird, wobei das Verfahren einen Schritt des Erlernens umfasst, durch den mit jedem der identifizierten Ausrüstungen der oder die Parameter zur thermischen Charakterisierung mit Hilfe einer Personen-Maschinen-Schnittstelle mit Konfiguration oder durch Selbsterlernen assoziiert wird, wobei der oder die Parameter zur thermischen Charakterisierung einen Parameter der thermischen Leistung und einen Parameter zur thermischen Verzögerung umfasst, wobei die Verzögerung nach vorne oder nach hinten sein kann.

2. Verfahren nach Anspruch 1, **dadurch gekennzeichnet, dass** es einen vorherigen Schritt des Identifizierens von Ausrüstungen umfasst, die eine thermische Leistung aufweisen, die streng kleiner oder streng größer als 1 unter den Energieverbrauchsausrüstungen (16.1...16.7) ist, um die Gesamtheit oder einen Teil der Einheit von mehreren identifizierten Ausrüstungen (16.1, 16.4, 16.5) darzustellen.

3. Verfahren nach Anspruch 2, **dadurch gekennzeichnet, dass** es die Speicherung für jede der Ausrüstungen, die eine thermische Leistung aufweisen, die kleiner oder strikt größer als 1 ist, eines vorzugsweise konstanten Werts des Parameter der thermischen Leistung umfasst.

4. Verfahren nach einem beliebigen der vorhergehenden Ansprüche, **dadurch gekennzeichnet, dass** es einen vorherigen Schritt des Identifizierens von Ausrüstungen umfasst, die eine verzögerte thermische Reaktion unter den Energieverbrauchsausrüstungen (16.1...16.7) aufweisen, um die Gesamtheit oder einen Teil der Einehehit von mehreren identifizierten Ausrüstungen (16.1, 16.4, 16.5) darzustellen.

5. Verfahren nach Anspruch 4, **dadurch gekennzeichnet, dass** es das Speichern für jede der Ausrüstungen mit einer verzögerten thermischen Reaktion eines Werts des Parameters der thermischen Verzögerung umfasst.

6. Verfahren nach einem beliebigen der vorhergehenden Ansprüche, **dadurch gekennzeichnet, dass** die identifizierten Ausrüstungen elektrische Ausrüstungen umfassen, und dadurch, dass der Wert der Energie, die von jeder identifizierten Ausrüstung verbraucht wird, durch eine Messung des elektrischen Verbrauchs gemessen wird, insbesondere eine Messung der Intensität des elektrischen Stroms, der elektrischen Leistung oder der verbrauchten elektrischen Energie.

7. Verfahren nach dem vorhergehenden Anspruch, **dadurch gekennzeichnet, dass** für mindestens eine elektrische Ausrüstung unter den identifizierten Ausrüstungen die Messung des elektrischen Verbrauchs mit Hilfe einer kommunizierenden Steckdose (22.1... 22.7) zur Versorgung der elektrischen Ausrüstung, einer kommunizierenden Zelle, die in die identifizierte Ausrüstung integriert ist, oder einer elektrischen Signatur, die auf einer elektrischen Tafel (18) zur Versorgung von mindestens einem Teil der Anlage, darin eingeschlossen die elektrische Ausrüstung, identifiziert ist, erfolgt.

8. Verfahren nach einem beliebigen der vorhergehenden Ansprüche, **dadurch gekennzeichnet, dass** für eine Untereinheit von nicht identifizierten Energieverbrauchsausrüstungen der Anlage, getrennt und vorzugsweise zusätzlich zur Einheit von mehreren identifizierten Ausrüstungen, ein Wert von gemeinsam von den nicht identifizierten Ausrüstungen verbrauchten Energie gemessen und eine Menge Wärme geschätzt wird, die durch die nicht identifizierten Ausrüstungen in die Anlage eingetragen oder von der Anlage extrahiert wird, je nach dem Wert der gemeinsam verbrauchten Energie.

9. Verfahren nach Anspruch 8, **dadurch gekennzeichnet, dass** die Untereinheit von nicht identifizierten Energieverbrauchsausrüstungen der Anlage aus elektrischen Ausrüstungen besteht, und dadurch, dass der Wert der Energie, der gemeinsam von den nicht identifizierten Energieverbrauchseinrichtungen verbraucht wird, durch eine Messung des elektrischen Verbrauchs gemessen wird, insbesondere eine Messung der Intensität des elektrischen Stroms, der elektrischen Leistung oder der verbrauchten elektrischen Energie.

10. Verfahren nach einem beliebigen der vorhergehenden Ansprüche, **dadurch gekennzeichnet, dass** die Schritte des Messens in Echtzeit durchgeführt werden.

11. Verfahren nach einem beliebigen der vorhergehenden Ansprüche, **dadurch gekennzeichnet, dass** es einen Schritt des Einstellens eines thermischen Modells ausgehend von bestimmten Werten im Laufe der Schritte des Messens und des Schätzens umfasst.

12. Verfahren nach dem vorhergehenden Anspruch, **dadurch gekennzeichnet, dass** eine Ausrüstung zur Heizung, zur Ventilation und/oder zur Klimatisierung der Anlage je nach dem thermischen Modell der Anlage gesteuert wird.

13. Verfahren nach einem der Ansprüche 11 oder 12, **dadurch gekennzeichnet, dass** es einen Schritt des Charakterisierens von nicht kontrollierten Elementen umfasst, umfassend einen Stopp der Einstellung des thermischen Modells.

**Claims**

1. Method for analyzing heat input in an installation (10), in particular a building, equipped with energy-using equipment (16.1 ... 16.7), **characterized in that** for an assembly of multiple identified items of equipment (16.1 , 16.4, 16.5) contributing to the heat balance of the building among the items of energy-using equipment (16.1 ... 16.7), an energy value is measured in real time for each of the identified items of equipment (16.1, 16.4, 16.5) and the quantity of heat supplied to the installation or extracted from the installation by each of the identified items of equipment (16.1, 16.4, 16.5) is estimated as a function of at least the value of energy consumed and one or more thermal characterization parameters associated with each of the identified items of equipment (16.1, 16.4, 16.5), wherein the method comprises a learning step, wherein each of the identified items of equipment is associated with the thermal characterization parameter(s), via a human-machine configuration or self-learning interface, wherein the one or more thermal characterization parameters comprise(s) a thermal efficiency parameter and a thermal delay parameter, wherein the delay may be in advance or late.

2. Method according to claim 1, **characterized in that** it comprises a prior step of identifying equipment having a thermal efficiency strictly less than or strictly greater than 1 among the items of energy-using equipment (16.1 ... 16.7) to constitute all or part of the assembly of several identified items of equipment (16.1, 16.4, 16.5).

3. Method according to claim 2, **characterized in that** it comprises the storage, for each of the items of equipment having a thermal efficiency less than or substantially greater than 1, of a value, preferably constant, of the thermal efficiency parameter.

4. Method according to any one of the preceding claims, **characterized in that** it comprises a prior step of identifying equipment having a delayed thermal response among items of energy-using equipment (16.1 ... 16.7) to constitute all or part of the assembly of several identified items of equipment (16.1, 16.4, 16.5).

5. Method according to claim 4, **characterized in that** it comprises the storage of a value of the thermal delay parameter for each of the items of equipment having a delayed thermal response.

6. Method according to any one of the preceding claims, **characterized in that** the identified equipment comprises electrical equipment and **in that** the value of energy used by each of the identified item of equipment is identified by a measurement of electrical consumption, in particular a measurement of the intensity of electrical current, electrical power or electrical energy consumed.

7. Method according to the preceding claim, **characterized in that** for at least one item of electrical equipment among the identified items of equipment, the measurement of power consumption is made via a communicating electrical outlet (22.1 ... 22.7) of the power supply of the electrical equipment, a communicating cell integrated with the identified items of equipment or an electrical signature identified on an electrical panel (18) of at least a part of the installation comprising the electrical equipment.

8. Method according to any one of the preceding claims, **characterized in that** for a subset of unidentified items of energy-using equipment of the installation, separate and preferably complementary to the assembly of several identified items of equipment, a value of energy consumed collectively by the unidentified items of equipment is

EP 3 134 955 B1

measured, and the amount of heat supplied to the installation or extracted from the installation by the unidentified items of equipment as a function of the energy value consumed collectively, is estimated.

9. Method according to claim 8, **characterized in that** the subset of unidentified items of energy-using equipment of the installation consists of electrical equipment, and **in that** the value of the energy consumed collectively by non-identified items of energy-using equipment is measured by a measurement of the electrical consumption, in particular a measurement of the intensity of the electrical current, electrical power or electrical energy consumed.

10. Method according to any one of the preceding claims, **characterized in that** the measuring steps are made in real time.

11. Method according to any one of the preceding claims, **characterized in that** it comprises a step of adjusting a thermal model from values determined during the measurement and estimation steps.

12. Method according to the preceding claim, **characterized in that** heating equipment, ventilation and air conditioning of the installation is controlled as a function of the thermal model of the installation.

13. Method according to one of the claims 11 or 12, **characterized in that** it comprises a step of characterization of uncontrolled elements comprising stopping the adjustment of the thermal model.

# Fig.1

**EP 3 134 955 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2932030
- US 20030050737 A
- EP 2378213 A